# FASCICULE DE BREVET EUROPEEN

(11) **EP 2 567 940 B1**
(45) Date de publication et mention de la délivrance du brevet: **21.06.2017**
(21) Numéro de dépôt: 11306106.3
(22) Date de dépôt: 06.09.2011
(51) Int. Cl.: C01B 33/40, C09C 1/42

(54) **PROCÉDÉ DE PRÉPARATION D'ARGILES AYANT DE NOUVELLES PROPRIÉTÉS PHYSICOCHIMIQUES**
VERFAHREN ZUR AUFBEREITUNG VON TONERDEN, DIE NEUE PHYSIKOCHEMISCHE EIGENSCHAFTEN HABEN
METHOD FOR PREPARING CLAYS HAVING NOVEL PHYSICO-CHEMICAL PROPERTIES

(43) Date de publication de la demande: 13.03.2013
(73) Titulaire: Ecole De Biologie Industrielle (EBI), 95094 Cergy Pontoise Cedex (FR)
(72) Inventeur: Lheritier, Anne-Marie, 95000 Cergy (FR); Holtzinger, Gérard, 92400 Courbevoie (FR); Issa, Samar, 95800 Cergy-Le-Haut (FR); Rahali, Younes, 10000 Rabat (MA); Bensouda, Yahya, 10000 Rabbat (MA)
(74) Mandataire: Cabinet Plasseraud

(56) Documents cités:
- EP-A1- 1 112 959
- US-A1- 2003 095 906
- US-B2- 7 507 392
- CHASTEK T T ET AL: "Hexadecyl-functionalized lamellar mesostructured silicates and aluminosilicates designed for polymer-clay nanocomposites. Part I. Clay synthesis and structure", POLYMER, ELSEVIER SCIENCE PUBLISHERS B.V, GB, vol. 46, no. 12, 26 mai 2005 (2005-05-26), pages 4421-4430, XP004897572, ISSN: 0032-3861, DOI: 10.1016/J.POLYMER.2005.03.006
- UKRAINCZYK L ET AL: "TEMPLATE SYNTHESIS AND CHARACTERIZATION OF LAYERED AL- AND MG-SILSESQUIOXANES", JOURNAL OF PHYSICAL CHEMISTRY. B, MATERIALS, SURFACES, INTERFACES AND BIOPHYSICAL, WASHINGTON, DC, US, vol. 101, 1 janvier 1997 (1997-01-01), pages 531-539, XP001118487, ISSN: 1089-5647, DOI: 10.1021/JP962937L
- LE FORESTIER L ET AL: "Textural and hydration properties of a synthetic montmorillonite compared with a natural Na-exchanged clay analogue", APPLIED CLAY SCIENCE, ELSEVIER SCIENCE, NL, vol. 48, no. 1-2, 1 mars 2010 (2010-03-01) , pages 18-25, XP026918026, ISSN: 0169-1317, DOI: 10.1016/J.CLAY.2009.11.038 [extrait le 2009-12-03]
- ZHANG D ET AL: "Synthesis of clay minerals", APPLIED CLAY SCIENCE, ELSEVIER SCIENCE, NL, vol. 50, no. 1, 1 septembre 2010 (2010-09-01), pages 1-11, XP027338705, ISSN: 0169-1317 [extrait le 2010-09-01]

## Description

### DOMAINE TECHNIQUE DE L'INVENTION

L'invention concerne un procédé de préparation d'argiles *à façon* permettant d'obtenir des argiles avec de nouvelles propriétés physicochimiques. L'invention concerne en outre l'utilisation de telles argiles dans les domaines de la chimie, de la cosmétique, et de la pharmacie, des peintures, du pétrole, des ciments, du phytosanitaire, de l'agroalimentaire, et de l'environnement.

### ARRIERE PLAN TECHNOLOGIQUE DE L'INVENTION

L'utilisation de particules d'argiles connaît actuellement un nouvel essor dans l'industrie. L'utilisation de telles particules présente un grand intérêt dans plusieurs secteurs industriels, notamment du fait de leurs propriétés rhéologiques. En effet, leurs propriétés physiques trouvent de nombreuses applications dans des domaines variés comme épaississant pour les produits cosmétiques, comme échangeur d'ions pour les produits phytosanitaires ou encore comme floculant dans le domaine de l'environnement. En outre, la synthèse de particules de morphologie et/ou de fonctionnalité contrôlées suscite un grand intérêt pour la réalisation de matériaux avec des propriétés uniques. En effet, les industries des produits manufacturés sont actuellement en recherche de nouveaux ingrédients qui répondent à la fois aux exigences économiques, environnementales et marketing.

L'art antérieur propose la modification en surface d'argiles pour leur attribuer de nouvelles fonctionnalités afin de répondre aux demandes actuelles. Plus précisément, il a été décrit la possibilité de modifier lesdites argiles par greffage de chaînes lipophiles ou par traitement avec des tensioactifs cationiques dans le but d'obtenir des structures amphiphiles.

Chastek et al. "Hexadecyl-functionalized lamellar mesostructured silicates and aluminosilicates designed for polymer-clay nanocomposites. Part 1. Clay synthesis and structure", POLYMER, ELSEVIER SCIENCE PUBLISHERS B.V,GB, vol. 46, no. 12, 26 mai 2005, pages 4421-4430, décrit un procédé de synthèse de silicates lamellaires modifiés par une chaîne hexadécyle lipophile.

US 7 507 392 B2 décrit un procédé de préparation d'un aluminosilicate obtenu à partir d'un mélange d'au moins un silane ayant un substituant hydrolysable et d'au moins un silane ayant un substituant non-hydrolysable.

Ainsi, la modification de la fonctionnalité de ces particules nécessite la modification de molécules préexistantes, dont les ressources sont actuellement limitées.

En outre, l'étendue des modifications possibles est restreinte par la structure même de l'argile avant modification. Enfin, l'efficacité de telles modifications s'avère souvent limitée. De telles argiles modifiées ne répondent donc pas aux attentes et aux besoins actuels des industriels, en recherche permanente d'innovation et d'amélioration de leurs produits.

Il existe donc un besoin pour un procédé permettant d'obtenir des argiles nouvelles et présentant des caractéristiques physicochimiques d'intérêt, qui s'affranchit d'une part de la limite liée aux ressources naturelles en argiles et d'autre part liée à la restriction des modifications possibles à partir desdites argiles.

### RÉSUMÉ DE L'INVENTION

Les inventeurs ont réussi à mettre en oeuvre un procédé de préparation d'argiles nouvelles, permettant de leur conférer des propriétés physicochimiques recherchées, élargissant ainsi la gamme d'argiles existantes et leurs possibilités d'utilisation.
Les inventeurs ont mis au point un procédé permettant d'obtenir des particules d'argiles d'amphiphilie variable, de taille submicronique, présentant des propriétés physicochimiques particulières. Ces argiles sont adaptées pour de multiples utilisations, comme par exemple la réalisation et la stabilisation d'émulsions ou de suspensions, la floculation, l'échange d'ions ou encore l'adsorption. Ces argiles sont également susceptibles de présenter des propriétés spécifiques, intimement liées à leur procédé d'obtention.

### DESCRIPTION DETAILLEE DE L'INVENTION

### Définition

Par "**argile**", ou "**particule d'argile**" on entend des aluminosilicates, c'est-à-dire des composés d'aluminium, de silicium et d'oxygène. Ces aluminosilicates peuvent présenter des degrés d'hydratation plus ou moins élevés en fonction de leur structure. La majorité des minéraux argileux appartiennent au groupe des silico-aluminates phylliteux. Ils sont organisés en couches planes infinies constituées d'unités structurales tétraédriques et octaédriques reliées par leurs sommets. Ce type de structure à très grande surface spécifique est associé à des caractéristiques physico-chimiques très particulières. La structure de base des silicates phylliteux est l'ion SiO₄⁴⁻, où le silicium est tétra coordonné par rapport à l'oxygène. Fréquemment de faible granulométrie, les argiles sont des minéraux souvent mal cristallisés et hydratés, de forme lamellaire ou fibreuse. Ils sont souvent présents en mélanges complexes d'espèces. Les minéraux argileux sont formés par l'empilement de feuillets, eux même constitués d'un empilement de couches. Aussi, les argiles trouvent des utilisations variées, notamment du fait de leur capacité à admettre de nombreux échanges de cations et d'anions dans le réseau ou leur capacité d'adsorption en surface.

Dans le contexte de la présente invention, par "caractéristiques **physicochimiques**", on entend sans limitation, les caractéristiques particulières des argiles obtenues selon le procédé. Ces caractéristiques sont notamment relatives à la lipophilie, l'hydrophilie, le degré d'hydratation desdites argiles, mais également leur granulométrie. Les caractéristiques des produits obtenues par le procédé sont conférées par le procédé lui-même en fonction des matériaux de départ et des conditions opératoires du procédé selon l'invention.

Dans le contexte de la présente invention, par "**silane fonctionnel**" ou "**silane**", on entend un composé chimique comprenant au moins un silicium.

Dans un premier aspect, l'invention concerne un procédé de préparation d'argile comprenant les étapes suivantes :
a) dissolution de sels AB dans un solvant dans lequel A est un cation choisi parmi l'aluminium, le magnésium, le calcium, le zinc, le manganèse, le fer, le cuivre et leurs mélanges et B est un anion choisi parmi le chlorure, le sulfate, l'hydrogénocarbonate, le carbonate, le phosphate, l'hydrogénophosphate, l'acétylacétonate et leurs mélanges;
b) ajout d'au moins un silane fonctionnel au mélange obtenu à l'étape a); et
c) ajout d'une base forte au mélange de l'étape b) sous agitation à une température inférieure à 40°C;
caractérisé en ce que ledit silane fonctionnel est un composé chimique de formule générale **(I)**

(R)ₘ-Si-(X)ₚ **(I)**

dans lequel
- chaque X est choisi indépendamment parmi un atome de chlore et un groupe alkoxy en C₁-C₄;
- chaque R est un groupement choisi indépendamment parmi les groupes acétoxy, alkyle, aminé, aminoalkyle, aryle, diaminoalkyle, époxy, fluoroalkyle, glycol, mercapto, ester d'acide silicique, silyle, uréide, vinyle et vinylalkyle;
- p est égal à 2, 3 ou 4;
- m est égal à 0, 1, 2 ; et
- p+m=4.
caractérisé en ce que
l'étape b) du procédé de l'invention consiste en l'ajout d'un mélange d'au moins un silane fonctionnel choisi parmi les silanes hydrophiles et d'au moins un silane fonctionnel choisi parmi les silanes lipophiles, et
lesdits silanes fonctionnels de formule (I) sont choisis parmi le (polyéther)triéthoxysilane, le benzyltriéthoxysilane, le benzyltriméthoxysilane, le benzyltriéthoxysilane, le 2-(bicycloheptyl)trichlorosilane, le p-(t-butyl)phénétyltrichlorosilane, le n-butyltrichlorosilane, le t-butyltrichlorosilane, le n-butyltriéthoxysilane, le t-butyltriméthoxysilane, le (cyclohexylméthyl)trichlorosilane, le cyclohexyltrichlorosilane, le cyclohexyltriméthoxysilane, le cyclooctyltrichlorosilane, le cyclooctyltriméthoxysilane, le cyclopentaméthylènedichlorosilane, le cyclopentyltrichlorosilane, le cyclopentyltriméthoxysilane, le n-décyltrichlorosilane, le n-décyltriéthoxysilane, le n-décyltriméthoxysilane, le docosyltrichlorosilane, le docosyltriéthoxysilane, le dodécyltrichlorosilane, le dodécyltriéthoxysilane, le dodécyltriméthoxysilane, le dicosyltrichlorosilane, l'(heptadécafluoro-1,1,2,2-tétrahydrodécyl)-trichlorosilane, l'(heptadécafluoro-1,1,2,2-tétrahydrodécyl)-triéthoxysilane, l'(heptadécafluoro-1,1, 2, 2-tétrahydrodécyl)-triméthoxysilane, le n-heptyltrichlorosilane, l'hexacosatrichlorosilane, le n-hexadécyltrichlorosilane, l'hexadécyltriéthoxysilane, l'hexyltrichlorosilane, l'hexyltriméthoxysilane, l'[hydroxy(polyéthylèneoxy)propyl]-triéthoxysilane (8-12 EO), l'isobutyltrichlorosilane, l'isobutyltriéthoxysilane, l'isobutyltriméthoxysilane, l'isooctyltrichlorosilane, l'isooctyltriéthoxysilane, l'isooctyltriméthoxysilane, le 2-[méthoxy(polyéthylèneoxy)propyl]triméthoxysilane, le méthoxytriéthylèneoxypropyltrichlorosilane, le méthoxytriéthylèneoxypropyltriméthoxysilane, le naphtylméthyltrichlorosilane, le (1-naphtyl)triéthoxysilane, le (1-naphtyl)triméthoxysilane, le nonafluorohexyltrichlorosilane, le nonafluorohexyltriéthoxysilane, le nonafluorohexyltriméthoxysilane, le n-octadécyltrichlorosilane, le n-octadécyltriéthoxysilane, le n-octadécyltriméthoxysilane, le n-octyltriéthoxysilane, le n-octyltriméthoxysilane, le pentyltrichlorosilane, le pentyltriéthoxysilane, le perfluoroalkyléthyl triéthoxysilane, le phényltrichlorosilane, le phényltriméthoxysilane, le 3-phénoxypropyltrichlorosilane, le 4-phénylbutyltrichlorosilane, le 6-phénylhexyltrichlorosilane, le 3-phénylpropyltrichlorosilane, le phényltrichlorosilane, le phényltriéthoxysilane, le phényltriméthoxysilane, le p-tolyltrichlorosilane, le p-tolyltriéthoxysilane, le p-tolyltriméthoxysilane, le 7-(trichlorosilylméthyl)pentadécane, le triacontyltrichlorosilane, le triéthoxysilylpropoxy(polyéthylèneoxy)-dodécanoate, le (triéthoxysilylpropyl)gluconamide,l'undécyltrichlorosilane,3-aminopropyltriméthoxysilane, 3-glycidyloxypropyltriméthoxysilane, 3-mercaptopropyltriméthoxysilane, vinyltriméthoxysilane, 3-méthacryloxypropyltriméthoxysilane, et leurs mélanges.

Il est également décrit ici un procédé de préparation d'argile comprenant les étapes suivantes :
a) dissolution de sels AB dans un solvant dans lequel A est un cation choisi parmi l'aluminium, le magnésium, le calcium, le zinc, le manganèse, le fer, le cuivre et leurs mélanges et B est un anion choisi parmi le chlorure, le sulfate, l'hydrogénocarbonate, le carbonate, le phosphate, l'hydrogénophosphate, l'acétylacétonate et leurs mélanges;
b) ajout d'au moins un silane fonctionnel au mélange obtenu à l'étape a); et
c) ajout d'une base forte au mélange de l'étape b) sous agitation à une température inférieure à 40°C;
caractérisé en ce que ledit silane fonctionnel est un composé chimique de formule générale **(I)**

(R)ₘ-Si-(X)ₚ **(I)**

dans lequel
- chaque X est choisi indépendamment parmi un atome de chlore et un groupe alkoxy en C₁-C₄;
- chaque R est un groupement choisi indépendamment parmi les groupes acétoxy, alkyle, aminé, aminoalkyle, aryle, diaminoalkyle, époxy, fluoroalkyle, glycol, mercapto, ester d'acide silicique, silyle, uréide, vinyle et vinylalkyle;
- p est égal à 2, 3 ou 4;
- m est égal à 0, 1, 2 ; et
- p+m=4.

Préférentiellement, le cation A du sel AB est un mélange d'aluminium et d'au moins un cation choisi parmi le magnésium, le calcium, le zinc, le manganèse, le fer et le cuivre.

Préférentiellement, la base forte de l'étape c) est choisie parmi : l'hydroxyde de sodium, l'hydroxyde de potassium, l'hydroxyde de lithium, l'hydroxyde de césium, et leurs mélanges.

Dans un mode de réalisation préféré, X de la formule (I) est choisi indépendamment parmi un atome de chlore et un groupe alkoxy en C₁-C₃.

Dans un mode de réalisation préféré, R de la formule (I) est un groupement choisi indépendamment parmi les groupes alkyle, halogénoalkyle, benzyle, fluoroalkyle, bicycloheptyl, p-(t-Butyl)phénéthyl, n-butyl, t-butyl, cyclohexylméthyl, cyclohexyl, cyclooctyl, cyclopentaméthylène, cyclopentyl, n-décyl, docosyl, dodécyl, eicosyl, heptadécafluoro-1,1,2,2-tétrahydrodécyl, n-heptyl, hexacosa, n-hexadécyl, hexyl, hydroxy(polyethyleneoxy)propyl, isobutyl, isooctyl, méthoxy(polyéthylèneoxy)propyl, naphtylméthyl, 1-naphtyl, nonafluorohexyl, n-octadécyl, n-octyl, pentyl, perfluoroalkyléthyl, phenéthyl, 3-phénoxypropyl, 4-phénylbutyl, 6-phénylhexyl, 3-phénylpropyl, phényl, p-tolyl, triacontyl, propoxy(polyéthylèneoxy)-dodécanoate, méthylpentadécane, propylgluconamide, undécyl, époxy et aryle.

De manière préférée, p=3 et m=1.

Dans un mode de réalisation, p=3 et X de la formule (I) représente -Cl.

Dans un autre mode de réalisation, p=3, et X de la formule (I) représente -OCH₃.

Dans un autre mode de réalisation, p=3 et X de la formule (I) représente - OC₂H₅.

Aussi, de manière préférée, X de la formule (I) est choisi indépendamment parmi un atome de chlore, un groupe -OCH₃ et un groupe -OC₂H₅.

Par **"alcoxy"** on entend un groupe alkyle en C₁-C₄, préférentiellement en C₁-C₃, lié à un atome d'oxygène.

Par **"base forte"**, on entend un produit qui se dissocie totalement au cours de sa réaction avec l'eau et qui est capable de capturer un ou plusieurs protons.

De manière préférée, l'étape a) du procédé consiste en la dissolution des sels choisis parmi le chlorure d'aluminium, le chlorure de calcium, et leur mélange dans un solvant. Le chlorure d'aluminium, le chlorure de calcium peuvent être aisément trouvés dans le commerce. Préférentiellement, ils se présentent respectivement sous les formes CaCl₂ anhydre et AlCl₃, 6H₂O.

De manière préférée, le solvant de l'étape a) du procédé de l'invention est choisi parmi les alcools et les mélanges hydroalcooliques. Préférentiellement, ledit solvant est un alcool et plus préférentiellement il s'agit de l'éthanol. Typiquement, cette solution d'éthanol est préalablement préparée et conservée à froid ou à l'ambiante. Typiquement, l'étape a) de dissolution des sels dans le solvant dure environ 5h. L'étape b) d'ajout d'au moins un silane du mélange de l'étape a) s'effectue sous des conditions permettant l'homogénéisation du milieu. L'homme du métier peut adopter les conditions opératoires afin d'obtenir une homogénéisation optimale. Typiquement, cette étape s'effectue sous agitation à une vitesse d'agitation d'environ 400 tpm (tour par minute) soit 41,9 radians par seconde (rad.s⁻¹) pendant une durée d'environ 5 minutes.

De manière préférée, l'étape c) s'effectue sous agitation. Préférentiellement, cette agitation s'effectue à une vitesse comprise entre environ 200 tpm (20,9 rad.s⁻¹) et environ 5000 tpm (523,6 rad.s⁻¹), préférentiellement entre environ 400 tpm (41,8 rad.s⁻¹) et environ 3000 tpm (314,1 rad.s⁻¹). Cette agitation peut être réalisée selon les méthodes classiques. Typiquement, cette agitation peut être réalisée dans un bécher de 8,4 cm de diamètre à l'aide d'un moteur Rayneri équipé d'une hélice à quatre pâles de 4,8 cm de diamètre, d'une turbine, préférentiellement de diamètre 3,9 cm, ou encore d'un rotor stator, préférentiellement constitué d'un stator d'un diamètre 4,8 cm et d'un rotor de 4,3 cm.

Ces conditions sont des conditions de laboratoire et peuvent être reproduites à l'échelle pilote et à l'échelle industrielle. L'homme du métier dispose des connaissances générales nécessaires à la transposition d'échelle.

L'étape c) s'effectue entre environ 30 minutes à environ 2h30. Les inventeurs ont montré que la durée de cette étape a une influence sur les caractéristiques physicochimiques du produit obtenu. Les inventeurs ont pu montrer que les conditions opératoires influent sur la nature du produit obtenu. Ils ont plus particulièrement mis en lumière le fait que l'étape c) de l'ajout de la base forte dans le milieu obtenu à l'étape b) est une étape clé pour l'optimisation de la formation des particules d'argiles avec des caractéristiques physicochimiques souhaitées. Plus précisément, les inventeurs ont montré que l'ajout lent de la base forte provoque une augmentation de la taille des particules d'argile.

L'invention s'écarte des techniques de modifications de surface d'argiles, actuellement exploitées, en ce qu'elle permet l'obtention d'une nouvelle argile synthétique qui répond à certaines exigences, notamment en termes de rhéologie, lesdites exigences ayant été posées dès le départ.

Dans un premier mode de réalisation, l'ajout de la base forte à l'étape c) du procédé de l'invention s'effectue en une seule fois et en une durée comprise entre environ 1 minute et environ 4 minutes, préférentiellement en environ 2 minutes.

Dans un second mode de réalisation de l'invention, l'ajout de la base forte à l'étape c) du procédé de l'invention s'effectue goutte à goutte et en une durée comprise entre environ 5 minutes et environ 45 minutes, préférentiellement entre environ 10 minutes et environ 30 minutes, préférentiellement en environ 20 minutes.
De manière préférée, le procédé de l'invention comprend en outre les étapes suivantes:
d) lavage ; et
e) centrifugation.

Les étapes d) et e) peuvent être répétées. Préférentiellement, elles sont répétées trois fois.

Typiquement, l'étape d) de lavage du procédé de l'invention s'effectue à l'aide d'eau permutée.

L'homme du métier dispose des connaissances générales techniques pour adapter la vitesse à laquelle l'étape e) de centrifugation est mise en oeuvre. Typiquement, elle s'effectue à une vitesse d'agitation comprise entre environ 400 tpm (41,8 rad.s⁻¹) et environ 6000 tpm (628,3 rad.s⁻¹), préférentiellement entre environ 1000 tpm (104,7 rad.s⁻¹) et environ 5000 tpm (523,6 rad.s⁻¹), préférentiellement entre environ 2000 tpm (209,4 rad.s⁻¹) et environ 4000 tpm (418,8 rad.s⁻¹) et encore plus préférentiellement à une vitesse d'environ 4000 tpm (418,8 rad.s⁻¹) pendant environ 15 minutes à 30 minutes.

A l'issue de cette étape e) de centrifugation, le surnageant est éliminé et le solide récupéré. Ledit solide subit alors une seconde étape de lavage, préférentiellement à l'aide d'eau permutée.

L'étape c) d'ajout de la base forte se fait à une température comprise entre environ 4°C et environ 40°C, préférentiellement à une température d'environ 25°C. De manière préférée, le procédé de l'invention s'effectue entièrement à température ambiante. Les inventeurs ont ainsi mis au point une technique qui répond aux exigences environnementales, qui représente aujourd'hui un véritable enjeu pour les industries de la chimie, de la cosmétique et de la pharmacie. En outre, en s'affranchissant de toute étape de chauffage, qui peut s'avérer coûteuse, l'invention répond également aux enjeux financiers inhérents à toute forme d'industrie.

Le procédé a l'avantage d'être un procédé "*à façon*", ce qui permet d'obtenir une large gamme d'argiles différentes, de caractéristiques physicochimiques dépendantes:
➢ d'une part de la nature des produits de départ, en particulier les silanes de formule (I) ;
➢ d'autre part des conditions opératoires, notamment les conditions de température et de durée de l'étape c).

Il est décrit qu'un silane fonctionnel de formule (I) peut être choisi parmi:
- le (polyéther)triéthoxysilane,
- le benzyltriéthoxysilane,
- le benzyltriméthoxysilane,
- le benzyltriéthoxysilane,
- le 2-(bicycloheptyl)trichlorosilane,
- le p-(t-butyl)phénétyltrichlorosilane,
- le n-butyltrichlorosilane,
- le t-butyltrichlorosilane,
- le n-butyltriéthoxysilane,
- le n-butyltriméthoxysilane,
- le t-butyltriméthoxysilane,
- le (cyclohexylméthyl)trichlorosilane,
- le cyclohexyltrichlorosilane,
- le cyclohexyltriméthoxysilane,
- le cyclooctyltrichlorosilane,
- le cyclooctyltriméthoxysilane,
- le cyclopentaméthylènedichlorosilane,
- le cyclopentyltrichlorosilane,
- le cyclopentyltriméthoxysilane,
- le n-décyltrichlorosilane,
- le n-décyltriéthoxysilane,
- le n-décyltriméthoxysilane,
- le docosyltrichlorosilane,
- le docosyltriéthoxysilane,
- le dodécyltrichlorosilane,
- le dodécyltriéthoxysilane,
- le dodécyltriméthoxysilane,
- le dicosyltrichlorosilane,
- l'(heptadécafluoro-1,1,2,2-tétrahydrodécyl)-trichlorosilane,
- l'(heptadécafluoro-1,1,2,2-tétrahydrodécyl)-triéthoxysilane,
- l'(heptadécafluoro-1,1,2, 2-tétrahydrodécyl)-triméthoxysilane,
- le n-heptyltrichlorosilane,
- l'hexacosatrichlorosilane,
- le n-hexadécyltrichlorosilane,
- l'hexadécyltriéthoxysilane,
- l'hexadécyltriéthoxysilane,
- l'hexyltrichlorosilane,
- l'hexyltriméthoxysilane,
- l'[hydroxy(polyéthylèneoxy)propyl]-triéthoxysilane (8-12 EO),
- l'isobutyltrichlorosilane,
- l'isobutyltriéthoxysilane,
- l'isobutyltriméthoxysilane,
- l'isooctyltrichlorosilane,
- l'isooctyltriéthoxysilane,
- l'isooctyltriméthoxysilane,
- le 2-[méthoxy(polyéthylèneoxy)propyl]triméthoxysilane,
- le méthoxytriéthylèneoxypropyltrichlorosilane,
- le méthoxytriéthylèneoxypropyltriméthoxysilane,
- le naphtylméthyltrichlorosilane,
- le (1-naphtyl)triéthoxysilane,
- le (1-naphtyl)triméthoxysilane,
- le nonafluorohexyltrichlorosilane,
- le nonafluorohexyltriéthoxysilane,
- le nonafluorohexyltriméthoxysilane,
- le n-octadécyltrichlorosilane,
- le n-octadécyltriéthoxysilane,
- le n-octadécyltriméthoxysilane,
- le n-octyltriéthoxysilane,
- le n-octyltriméthoxysilane,
- le pentyltrichlorosilane,
- le pentyltriéthoxysilane,
- le perfluoroalkyléthyl triéthoxysilane,
- le phényltrichlorosilane,
- le phényltriméthoxysilane,
- le 3-phénoxypropyltrichlorosilane,
- le 4-phénylbutyltrichlorosilane,
- le 6-phénylhexyltrichlorosilane,
- le 3-phénylpropyltrichlorosilane,
- le phényltrichlorosilane,
- le phényltriéthoxysilane,
- le phényltriméthoxysilane,
- le p-tolyltrichlorosilane,
- le p-tolyltriéthoxysilane,
- le p-tolyltriméthoxysilane,
- le 7-(trichlorosilylméthyl)pentadécane,
- le triacontyltrichlorosilane,
- le triéthoxysilylpropoxy(polyéthylèneoxy)-dodécanoate,
- le (triéthoxysilylpropyl)gluconamide,
- le tétraéthylorthosilicate
- l'undécyltrichlorosilane,
- 3-aminopropyltriméthoxysilane,
- 3-glycidyloxypropyltriméthoxysilane,
- 3-mercaptopropyltriméthoxysilane,
- vinyltriméthoxysilane,
- 3-méthacryloxypropyltriméthoxysilane,
- 3-chloropropyltriéthoxysilane, et
- leurs mélanges.

Ces silanes sont accessibles dans le commerce et sont notamment commercialisés par la société Evonik sous la dénomination générale Dynasylan®.

Le silane fonctionnel de formule (I) peut être lipophile ou hydrophile.

L'étape b) du procédé de l'invention consiste en l'ajout d'un mélange d'au moins un silane fonctionnel choisi parmi les silanes hydrophiles et d'au moins un silane fonctionnel choisi parmi les silanes lipophiles.

Il est décrit qu'un silane fonctionnel de formule (I) peut être choisi parmi: l'octyltriéthoxysilane, le (polyéther)triéthoxysilane et le tétraéthylorthosilicate.

L'octyltriéthoxysilane est un silane présentant un caractère lipophile. Il commercialisée par la société Evonik sous la dénomination commerciale Dynasylan® octeo.

Le (polyéther)triéthoxysilane est un silane présentant un caractère hydrophile. Il est commercialisé par la société Evonik sous la dénomination commerciale Dynasylan® 4140.

Le tétraéthylorthosilicate est un silane présentant un caractère hydrophile. Il est commercialisé par la société Evonik sous la dénomination commerciale Dynasylan® A.

Les inventeurs ont mis en lumière le fait que la proportion de silane hydrophile et de silane lipophile modifiait considérablement la granulométrie des argiles obtenues selon le procédé, ce qui permet de moduler les caractéristiques physicochimiques des produits obtenus.

Dans un second aspect, l'invention concerne également l'argile obtenue selon le procédé de l'invention. Ces argiles sont préférentiellement des aluminosilicates calciques.

Typiquement, l'argile obtenue par le procédé de l'invention est insoluble dans l'eau.

Typiquement, l'argile obtenue par le procédé de l'invention est sous forme de particule de taille submicronique et/ou micronique. De manière encore plus préférée, ladite argile est sous forme de particule de taille moyenne comprise entre 100 nm et 20 µm

Par "particule de taille submicronique", on entend une particule dont la taille moyenne est strictement supérieure à 100 nm et est inférieure ou égale à 1 µm.

Par "particule de taille micronique", on entend une particule dont la taille moyenne est strictement supérieure à 1 µm et est inférieure ou égale à 20 µm.
Les nanoparticules de taille inférieures à 100 nm ont récemment démontré d'importants effets toxiques. En effet, il apparaît que les nanoparticules sont bien plus réactives que les particules de taille submicronique. C'est ainsi qu'une substance reconnue comme non toxique, telle que le dioxyde de titane, démontre une importante toxicité pulmonaire lorsqu'elle est de dimension nanométrique. Aussi les particules de l'invention ayant une taille moyenne supérieure à 100 nm ne présentent pas de toxicité liée à leur taille.

Les inventeurs ont mis au point un procédé permettant de synthétiser de nouvelles argiles avec des nouvelles propriétés. Aussi, le procédé de l'invention permet la création de nouvelles catégories de molécules, hautement adaptées à une utilisation dans l'industrie, dans des domaines aussi variés que l'industrie de la chimie fine, de la cosmétique, de la pharmacie, de l'agroalimentaire, du bâtiment, de la peinture mais aussi de l'agriculture et dans le domaine de l'environnement. En effet, ces dernières années ont été marquées par un intérêt grandissant des industries modernes pour l'utilisation d'argiles naturelles ou modifiées.

Notamment, les argiles ont récemment montré un intérêt particulier:
➢ en tant que tensioactif, notamment dans l'industrie de la cosmétique, de la pharmacie, de l'agroalimentaire, du bâtiment, de la peinture et dans le domaine de l'environnement;
➢ en tant qu'échangeur d'ions, notamment dans le domaine de l'environnement et dans l'industrie de la chimie fine;
➢ en tant que floculant, notamment dans le domaine de l'environnement,
➢ en tant qu'épaississant dans les industries de la cosmétique, de la pharmacie, de l'agroalimentaire et de la peinture; et
➢ en tant qu'adsorbant dans l'agriculture et l'environnement.

Aussi, dans un troisième aspect, l'invention concerne l'utilisation de l'argile obtenue selon le procédé de l'invention, en tant que tensioactif, échangeur d'ions, floculant, épaississant ou adsorbant.

Par **"tensioactif"**, ou agent de surface, détergent, surfactant, émulsionnant ou encore émulsifiant, on entend toute substance ayant la propriété de s'adsorber aux interfaces et donc de diminuer les tensions interfaciales. Ces tensioactifs permettent la stabilisation d'émulsions ou de suspensions. Les propriétés des agents de surface étant déterminées par leur structure, le caractère fondamental de ces produits est l'amphiphilie, c'est à dire la présence dans la molécule de deux groupements ayant des caractères de solubilité totalement différents :
➢ un groupement soluble dans l'huile, dit 'lipophile'; et
➢ un groupement soluble dans l'eau, dit 'hydrophile'.
On distingue les agents de surface anioniques, cationiques, amphotères et non ioniques.

Les inventeurs ont réussi à utiliser ces argiles comme tensioactifs.

Par "échangeur d'ions" on entend une macromolécule insoluble portant des groupements ionisables, qui a la propriété d'échanger de façon réversible certains de ses ions, au contact d'autres ions provenant par exemple d'une solution. Les argiles de l'invention sont hautement appropriées pour une utilisation en tant qu'échangeur d'ions, notamment sous la forme de résine. En fonction de la nature des groupements fonctionnels des argiles obtenues selon le procédé de l'invention, ces dernières pourront être utilisées en tant que :
➢ résine cationique forte ou intermédiaire, notamment si l'argile comporte un groupement sulfonique ou un groupement phosphate d'hydrogène;
➢ résine cationique faible, notamment si l'argile comporte un groupement carboxylique ou carboxyméthyl;
➢ résine cationique très faible, notamment si l'argile comporte un groupement phénolique;
➢ résine anionique forte, notamment si l'argile comporte un groupement aminé tertiaires ou quaternaire; et
➢ résine anionique faible, notamment si l'argile comporte un groupement aminé primaire ou secondaire.

Par **"floculant"**, on entend une substance qui, quand elle est ajoutée à l'eau, favorise l'agrégation des micelles et des matières en suspension. Les floculants, une fois dans l'eau attirent les fines particules de matières organiques telles que bactéries, virus et autres agents potentiellement dangereux pour l'homme afin de faciliter par exemple leur filtration. Les argiles de l'invention sont susceptibles d'être utilisées comme floculant, notamment pour le traitement de l'eau, notamment pour la dépollution ou la potabilisation de l'eau.

Par "**agent épaississant**" ou "**épaississant**", on entend une molécule susceptible d'augmenter la viscosité d'une préparation liquide. Le procédé de l'invention permet d'obtenir des argiles avec des propriétés améliorées et pertinentes pour leur utilisation en tant qu'épaississant.

Par "**adsorbant**", on entend une substance susceptible de retenir de molécules libres à sa surface. Les argiles de l'invention s'avèrent pertinentes pour une utilisation en tant qu'adsorbant, notamment dans le contexte de l'agriculture et de l'environnement. Elles peuvent servir de support de produits adsorbés et empêcher, par exemple, la contamination environnementale par les pesticides. En effet, les argiles de l'invention sont adaptées, entre autres, à une utilisation pour le traitement de l'eau naturelle, notamment pour la production d'eau potable.

Dans un quatrième aspect, l'invention concerne l'utilisation de l'argile obtenue selon le procédé de l'invention, en tant que tensioactif. En choisissant la nature des silanes fonctionnels de départ pour la mise en oeuvre de l'invention, et en adaptant les conditions opératoires de cette mise en oeuvre, l'homme du métier est susceptible d'obtenir une argile présentant un HLB désiré. Cette argile, ayant des propriétés physicochimiques et rhéologiques uniques, permet alors la mise en oeuvre d'émulsion. La stabilisation des émulsions à l'aide de tensioactifs solides est décrite dans l'art antérieur. L'homme du métier pourra par exemple se référer aux conditions opératoires décrites pour l'obtention d'émulsions de Pickering à partir de silices solides, comme par exemple dans la publication Praktikum Grenzflächenchemie II, Catalysis and surface science lab course expriment, Technische Universität Chemnitz.

Toutefois, l'art antérieur ne décrit pas de procédé permettant de synthétiser de nouvelles argiles, en fonction de caractéristiques fonctionnelles désirées et adaptées à une utilisation particulière.

Par **"émulsion"**, on entend un système hétérogène de deux liquides non miscibles, généralement une phase aqueuse et une phase liquide lipophile dont l'une des deux phases est dispersée dans l'autre sous forme de fines gouttelettes, l'ensemble étant homogène à l'oeil nu. La réussite d'une émulsion dépend :
➢ de la nature des ingrédients;
➢ du rapport eau, huile et agent de surface; et
➢ des modes de préparation.

Les émulsions de la présente invention peuvent être par exemple des émulsions à usage cosmétique, alimentaire ou pharmaceutique. Ces émulsions trouvent également un intérêt grandissant également dans l'industrie de la peinture et du bâtiment, notamment dans le cadre de l'émulsion de bitume. En effet; l'argile selon l'invention facilite la dispersion des gouttelettes de bitume en abaissant la tension superficielle de la phase aqueuse et par là même, la tension interfaciale eau-bitume. En outre, l'argile assure la stabilité de l'émulsion en formant une pellicule protectrice monomoléculaire adsorbée à la surface des particules de bitume. De manière préférée, l'utilisation d'argiles obtenues selon le procédé permet l'obtention d'émulsions stables.

Par **"émulsion stable"**, on entend une émulsion qui ne présente pas de phénomènes de coalescence ou de synérèse après conservation pendant 6 mois à la température ambiante, de préférence après conservation pendant 12 mois à la température ambiante, et plus préférentiellement encore pendant 18 mois à la température ambiante.

Par **"synérèse"**, on entend le procédé par lequel le liquide est libéré spontanément de la matrice gélifiée.

Par **"coalescence"**, on entend le fusionnement des gouttelettes d'une émulsion caractérisée par la formation d'agrégats et qui conduit à la rupture d'une émulsion.

Par "**émulsion stabilisée par particule**", on entend une émulsion stabilisée par des particules présentant la spécificité d'être compatibles avec les deux phases. Des particules hydrophiles présentent des angles de contact inférieur à 90 °avec l'eau et stabilisent des émulsions huile-dans-eau. En revanche, des particules hydrophobes ont des angles de contact supérieur à 90° avec l'eau et stabilisent les émulsions eau-dans-huile. La taille desdites particules influe également sur la stabilité des émulsions. En effet, les particules de petite taille permettent une meilleure stabilité des émulsions. En outre, l'augmentation de la concentration de particules diminue généralement les phénomènes de coalescence de l'émulsion.

En effet, du fait du caractère amphiphile des argiles de l'invention, la tension interfaciale est diminuée de manière optimale. En outre, par leur taille, géométrie, pouvoir d'adsorption elles stabilisent mécaniquement les émulsions.

Enfin, dans un cinquième aspect, l'invention concerne l'utilisation de l'argile obtenue selon le procédé de l'invention en tant que matrice de greffage d'une molécule ou d'une composition de molécules. Préférentiellement, il s'agit d'une molécule ou une composition de molécules ayant une activité chimique.

Dans le contexte de la présente invention, l'expression "**une molécule ou une composition de molécules ayant une activité chimique**" désigne une molécule ou une composition de molécules classiquement utilisées pour ses propriétés spécifiques comme par exemple la rétention de solvants, l'amélioration de la texture, la conservation, la protection contre les UV, l'activité thérapeutique ou phytosanitaire.

Par "**matrice de greffage d'une molécule**", on entend la capacité de l'argile obtenue à se lier à une molécule ou une composition de molécules pour en être un support. Un tel greffage permet l'obtention d'une argile utile comme vecteur de ladite molécule.

De manière préférentielle, ce greffage s'effectue en surface de ladite argile au moyen de groupements réactifs permettant la formation de liaisons covalentes avec ladite molécule ou ladite composition de molécules. Dans le contexte de la présente invention, tout phénomène chimique ou physique permettant le greffage en surface d'une molécule ou d'une composition de molécules sur l'argile selon l'invention peut être appliqué à ladite argile.

En outre, les argiles de l'invention peuvent également être utilisées comme modèles de sols. Ces modèles permettent une compréhension améliorée des phénomènes de pollution des sols.

L'invention sera illustrée de manière non limitative par les exemples ci-dessous.

### LEGENDE DES FIGURES

**Figure 1****:** Schématisation des étapes du procédé
**Figure 2**: Spectre Infra Rouge à transformée de Fourier d'une argile selon l'invention (M10) obtenue à partir de Dynasylan® 4140 à une concentration molaire de 32% et de Dynasylan® Octeo à une concentration molaire de 68%.
**Figure 3**: Spectre Infra Rouge à transformée de Fourier d'une argile (M31) obtenu à partir de Dynasylan® 4140, Dynasylan® Octeo et Dynasylan® A dans des proportions équimassiques.
**Figure 4** : Spectre Infra Rouge à transformée de Fourier d'une argile (M32) obtenu à partir de Dynasylan® 4140 à une concentration molaire de 70%, Dynasylan® Octeo à une concentration molaire de 5% et de Dynasylan® A à une concentration molaire de 25%.
**Figure 5**: Spectre Infra Rouge à transformée de Fourier d'une argile obtenu à partir de Dynasylan® 4140, de Dynasylan® Octeo et de Dynasylan® A dans des proportions équimolaires.
**Figure 6****:** Spectre Infra Rouge à transformée de Fourier d'une argile (M28) à partir de Dynasylan® 4140 à une concentration molaire de 32%, de Dynasylan® Octeo à une concentration molaire de 44% et de Dynasylan® A à une concentration molaire de 24%.

### EXEMPLES

### Exemple 1 : Préparation d'argiles selon l'invention à partir de deux silanes

Dans cette partie, l'influence des différents paramètres du procédé a été étudiée sur une formulation qui contenait deux silanes.

### A] Essais avec le Dynasylan® 4140 et le Dynasylan® Octeo

Les inventeurs ont réalisé plusieurs argiles à l'aide d'un mélange de deux silanes. Les produits et les quantités utilisées pour la mise en oeuvre du procédé de l'invention sont détaillés dans le tableau ci-dessous.

**Tableau 1 : produits et quantité utilisée pour la mise en oeuvre du procédé avec le Dynasylan® 4140 et le Dynasylan® Octeo**

| PHASE | PRODUITS | MASSE(G) | MASSE MOLAIRE (G/MOL) | MOLES (MOL) |
|---|---|---|---|---|
| **A** | CaCl₂ anhydre | 3.29 | 111.1 | 0.03 |
| | AlCl₃, 6H₂O | 7.38 | 241,5 | 0.03 |
| | Ethanol 99% | 197.25 | 46 | 4.29 |
| **B** | Dynasylan® 4140 | 9.99 | 520 | 0.019 |
| | Dynasylan® Octeo | 11.27 | 276.5 | 0.041 |
| **C** | NaOH | 7.48 | 40 | 0.187 |
| | Eau | 100 | 18 | 5.56 |

Les sels sont pesés à l'aide d'une balance de précision (±0,01g) puis versés dans un bécher de forme basse IL. Dans ce bécher, sont dissous les sels de CaCl₂ (0,03moles ; 3,29g) et de (AlCl₃, 6H₂O)(0,03moles ; 7,38g) en présence d'éthanol (250mL) avec l'agitateur qui servira à la réaction (hélice, turbine, rotor/stator). En parallèle, dans un autre bécher, les silanes, c'est-à-dire le Dynasylan® Octeo (0,041 moles ; 11,27g), qui est lipophile et le Dynasylan® 4140 (0,019 moles ; 10g), qui est hydrophile, sont pesés et homogénéisés avec un barreau aimanté. De même, une solution de soude à 7,5% est préparée. Les pastilles de soude (0,1875 moles ; 7,5g) sont pesées puis dissoutes dans l'eau (environ 100 mL) à l'aide d'un barreau aimanté. Lorsque les sels sont dissous, les silanes sont ajoutés au milieu. Lorsque le milieu est homogène, la solution de soude est ajoutée selon les conditions étudiées:
➢ soit par ajout en une seule fois pendant environ 2 minutes,
➢ soit par ajout goutte à goutte pendant environ 20 minutes.

Après l'ajout de cette solution de soude, plusieurs paramètres sont étudiés (agitateur, durée d'agitation, vitesse d'agitation, température) et lorsque la réaction est terminée, le milieu est récupéré pour effectuer lavages et centrifugations à trois reprises.

Pour laver le milieu, de l'eau permutée est ajoutée. Le milieu est ensuite récupéré et placé en centrifugeuse pendant 15 minutes à 4000 tpm (418,8 rad.s⁻¹). Après l'étape de centrifugation, le surnageant est éliminé et le solide récupéré puis replacé dans le bécher en présence d'eau permutée. Le milieu est homogénéisé à nouveau, et l'étape se répète deux fois. Le produit est alors récupéré dans un flacon puis placé à 4°C. Ensuite, est effectuée la mesure granulométrique pour déterminer la taille des particules synthétisées.

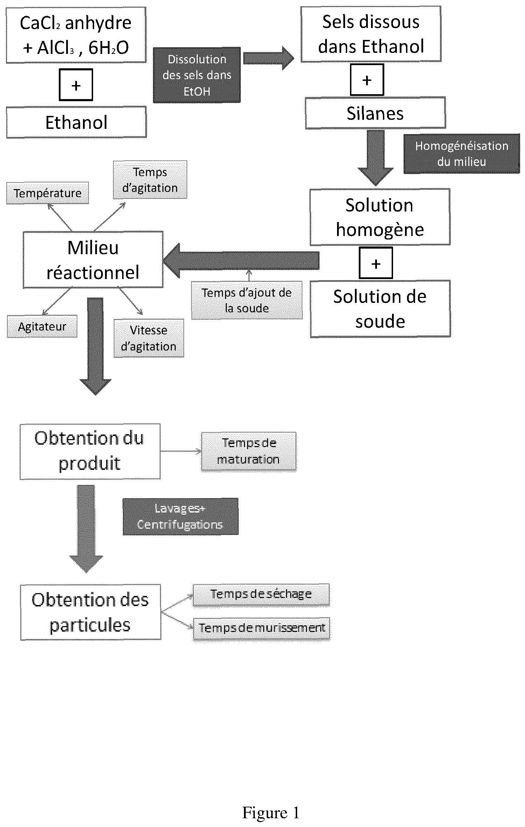

Les étapes du procédé sont schématisées dans la figure 1.

Les inventeurs ont réalisé plusieurs argiles selon ce protocole en modifiant les paramètres suivants:
➢ type d'agitateur: à hélice, à turbine ou à rotor-stator;
➢ la vitesse d'agitation: 200 tpm (20,94 rad.s⁻¹), 400 tpm (41,89 rad.s⁻¹), 700 tpm (73,3 rad.s⁻¹), 800 tpm (83,78 rad.s⁻¹) et 3000 tpm (314, 16 rad.s⁻¹);
➢ la température: 20°C et 40°C; et
➢ le temps d'agitation: 30 min, 60 min, 90 min et 150 min.

Ils ont ensuite établi la granulométrie des argiles obtenues selon les manipulations, notées M1 à M21. Pour chaque essai décrit ci-après, la mesure de la taille est réalisée grâce au granulomètre laser Malvern dans de l'eau déminéralisée.

**Tableau 2 : Résultats granulométriques en nombre des différentes particules obtenues avec deux silanes et des paramètres différents**

| **D (µM)** | **D(0,1)** | **D(0,5)** | **D(0,9)** |
|---|---|---|---|
| **M1** | 0,612 | 0,864 | 3,772 |
| **M2, 30 minutes** | 0,540 | 0,748 | 2,065 |
| **M3, 1h** | 0,536 | 0,717 | 2,079 |
| **M4, 1h30** | 0,535 | 0,729 | 2,061 |
| **M5** | 0,545 | 0,767 | 2,588 |
| **M6** | 0,615 | 0,849 | 2,551 |
| **M7** | 0,682 | 1,541 | 3,942 |
| **M8** | 0,617 | 0,927 | 2,837 |
| **M9** | 0,615 | 0,881 | 3,075 |
| **M10** | 0,619 | 0,877 | 2,958 |
| **M11** | 0,616 | 0,849 | 3,088 |
| **M12** | 0,612 | 0,830 | 2,991 |
| **M13** | | | |
| **t0** | 2.308 | 3.879 | 8.143 |
| **3 semaines** | 1.714 | 2.982 | 6.649 |
| **2 mois** | 0.607 | 0.756 | 3.284 |
| **M14** | 0,553 | 0,814 | 1,804 |
| **M15** | 1,642 | 2,799 | 7,247 |
| **M16** | 0,550 | 0,779 | 2,671 |
| **M17** | 0,401 | 0,553 | 1,584 |
| **M18** | 1,68 | 2,83 | 6.57 |
| **M19** | | | |
| **t0,24h,96h** | 1.518 | 2.506 | 5.356 |
| **20 jours** | 0.611 | 0.787 | 3.573 |
| **M20** | | | |
| **t0, 24h** | 1.86 | 2.882 | 6.381 |
| **16 jours** | 0.608 | 0.775 | 3.36 |
| **M21** | | 0.770 | 3.242 |
| | 0.608 | | |
| **16 jours** | | | |

Les inventeurs ont réussi à montrer que les paramètres liés:
➢ à la nature de l'agitateur,
➢ à la durée d'agitation,
➢ à la vitesse d'agitation, et
➢ à la température,
n'ont pas d'influence significative sur la granulométrie des particules d'argiles obtenues.

### B] Essais avec le Dynasylan® Octeo et polyéther ABCR

Les inventeurs ont mis en oeuvre le procédé de l'invention avec un autre silane, le polyéther ABCR ou 3-[hydroxy(polyethylèneoxy)propyl]-triéthoxysilane commercialisé notamment par la société ROTH Sochiel. La formule de réaction pour chacune des manipulations M22 à M25 est présentée dans le tableau suivant.

Le protocole est identique à celui décrit au point A]. Les produits et les quantités utilisées pour la mise en oeuvre du procédé de l'invention sont détaillés dans le tableau ci-dessous.

**Tableau 3 : Produits et quantité utilisée pour la réaction de synthèse avec le polyéther ABCR et le Dynasylan® Octeo (M22, M23, M24, M25)**

| PHASE | PRODUITS | MASSE(G) | MASSE MOLAIRE (G/MOL) | MOLES (MOL) |
|---|---|---|---|---|
| **A** | CaCl₂ anhydre | 3.29 | 111.1 | 0.03 |
| | AlCl₃, 6H₂O | 7.38 | 241,5 | 0.03 |
| | Ethanol | 197.25 | 46 | 4.29 |
| **B** | Polyéther ABCR | 10 | 660 | 0.015 |
| | Dynasylan® Octeo | 11.27 | 276.5 | 0.041 |
| **C** | NaOH | 7.48 | 40 | 0.187 |
| | Eau | 100 | 18 | 5.56 |

L'analyse granulométrique de ces essais est présentée dans le tableau 5.

**Tableau 4: Résultats granulométriques en nombre des différentes particules obtenues par le procédé réalisé avec le polyéther ABCR et le Dynasylan® Octeo**

| **D (µM)** | **D(0,1)** | **D(0,5)** | **D(0,9)** |
|---|---|---|---|
| **M22** | 2.259 | 3.8 | 8.393 |
| **M23** | 1.972 | 3.507 | 8.183 |
| **M24** | 0.606 | 0.748 | 2.83 |
| **M25** | 0.606 | 0.744 | 2.260 |

Les paramètres étudiés n'ont pas d'influence significative sur la granulométrie.

### Exemple 2 (comparatif) : Mise en oeuvre du procédé avec trois silanes

### A] Préétude de la variation de la composition des argiles : influence de la proportion des silanes

Dans un premier temps, trois formulations ont été réalisées en faisant varier les pourcentages massiques des silanes afin de déterminer leur influence éventuelle sur la taille des particules.

L'unique paramètre étudié est la proportion des silanes. Pour cela les inventeurs ont préparé des argiles en utilisant des proportions différentes de silanes comme ci suit:
- une proportion équimassique Dynasylan® 4140, Dynasylan® A, Dynasylan® Octeo) (M26, voir tableau 5),
- une proportion de 70% de Dynasylan® 4140, 25% de Dynasylan® A, 5% de Dynasylan® Octeo (M27, voir tableau 6); et
- une proportion de 32% de Dynasylan® 4140, 24% de Dynasylan® A, 44% de Dynasylan® Octeo (M28, voir tableau 7).

Les pourcentages indiqués ci-dessus correspondent à des pourcentages par rapport à la masse totale des silanes fonctionnels utilisés pour la mise en oeuvre du procédé, soit à la masse de la phase B comme indiquée dans les tableaux ci-dessous, qui récapitulent les produits et quantité utilisée pour la réaction de synthèse pour l'obtention des formules M26, M27 et M28.

**Tableau 5 : Formule de synthèse des argiles pour la manipulation M26**

| **PHASE** | **PRODUITS** | **MASSE(G)** | **MASSE MOLAIRE (G/MOL)** | **MOLES (MOL)** |
|---|---|---|---|---|
| **A** | CaCl₂ anhydre | 1.1 | 111.1 | 0.0099 |
| | AlCl₃, 6H₂O | 2.38 | 241.5 | 0.0099 |
| | Ethanol | 71 | 46 | 1.54 |
| **B** | Dynasylan® 4140 | 5.67 | 520 | 0.0109 |
| | Dynasylan® A | 5.76 | 208 | 0.0277 |
| | Dynasylan® Octeo | 5.68 | 276.5 | 0.0205 |
| **C** | NaOH | 4 | 40 | 0.1 |
| | Eau | 11 | 18 | 0.61 |

**Tableau 6 : Formule de synthèse des argiles pour la manipulation M27**

| **PHASE** | **PRODUITS** | **MASSE(G)** | **MASSE MOLAIRE (G/MOL)** | **MOLES (MOL)** |
|---|---|---|---|---|
| A | CaCl₂ anhydre | 1.05 | 111.1 | 0.00945 |
| | AlCl₃, 6H₂O | 2.37 | 241.5 | 0.0099 |
| | Ethanol | 71 | 46 | 1.54 |
| B | Dynasylan® 4140 | 11.90 | 520 | 0.0228 |
| | Dynasylan® A | 4.30 | 208 | 0.0206 |
| | Dynasylan® Octeo | 0.87 | 276.5 | 0.00315 |
| C | NaOH | 4.49 | 40 | 0.11225 |
| | Eau | 11 | 18 | 0.61 |

**Tableau 7 : Formule de synthèse des argiles pour la manipulation M28**

| **PHASE** | **PRODUITS** | **MASSE(G)** | **MASSE MOLAIRE (G/MOL)** | **MOLES (MOL)** |
|---|---|---|---|---|
| A | CaCl₂ anhydre | 1.08 | 111.1 | 0.00979 |
| | AlCl₃, 6H₂O | 2.38 | 241.5 | 0.00986 |
| | Ethanol | 71 | 46 | 1.54 |
| B | Dynasylan® 4140 | 5.42 | 520 | 0.0104 |
| | Dynasylan® A | 4.08 | 208 | 0.0196 |
| | Dynasylan® Octeo | 7.48 | 276.5 | 0.0027 |
| C | NaOH | 4.19 | 40 | 0.10475 |
| | Eau | 11 | 18 | 0.61 |

L'analyse granulométrique de ces essais est présentée dans le tableau 8.

**Tableau 8 : résultat granulométrique en nombre des particules argiles obtenues en faisant varier les différents silanes**

| **D(µM)** | **D(0,1)** | **D(0,5)** | **D(0,9)** |
|---|---|---|---|
| **M26** | 1,955 | 3,23 | 6,914 |
| **M27** | 3,985 | 6,536 | 15,892 |
| **M28** | 0,605 | 0,741 | 1,999 |

Les résultats montrent que la granulométrie varie significativement en fonction des pourcentages massiques des différents silanes. En effet, la granulométrie augmente significativement avec la diminution de la proportion massique du Dynasylan® Octeo.

### B] Influence des paramètres du procédé sur la nature du produit obtenu

Les inventeurs ont mis en oeuvre le procédé précédemment décrit en faisant varier les paramètres suivants (la température, vitesse d'agitation, temps d'ajout de la soude). Les résultats sont détaillés ci-après.

### 1. Influence de la température sur la granulométrie ambiante

### ❖ Température ambiante

La réaction a été effectuée à température ambiante (23°C ±2°C) et 400 tpm (41,8 rad.s⁻¹) avec ajout de la soude rapide (2 minutes).
Les silanes fonctionnels ont été utilisés dans les manipulations M29 et M30 dans les proportions suivantes:
➢ M29: 33,33% (Dynasylan® 4140, Dynasylan® A, Dynasylan® Octeo);
➢ M30: 70% Dynasylan® 4140, 25% Dynasylan® A, 5% Dynasylan® Octeo.
Les résultats de l'analyse granulométrique sont présentés dans le tableau suivant.

**Tableau 9 : Résultats granulométriques en nombre des formules préparées à l'ambiante**

| **D(µM)** | **D(0,1)** | **D(0,5)** | **D(0,9)** |
|---|---|---|---|
| **M29** | 0.461 | 0.597 | 2.283 |
| **M30** | 3.121 | 6.179 | 15.754 |

Les inventeurs ont ainsi montré que l'influence de la proportion massique des silanes sur la taille des particules. En effet, il apparaît que la granulométrie augmente lorsque la proportion du Dynasylan® Octeo est diminuée.

### ❖ La température à 40°C

La réaction a été effectuée à 40°C et 400 tpm (41,8 rad.s⁻¹) avec ajout de la soude rapide (2 minutes).

Les silanes fonctionnels ont été utilisés dans les manipulations M31 et M32 dans les proportions suivantes:
➢ M31: 33,33% (Dynasylan® 4140, Dynasylan® A, Dynasylan® Octeo);
➢ M32: 70% Dynasylan® 4140, 25% Dynasylan® A, 5% Dynasylan® Octeo.

**Tableau 10 : granulométrie avec ajout rapide de la soude**

| **D(µM)** | **D(0,1)** | **D(0,5)** | **D(0,9)** |
|---|---|---|---|
| **M31** | 0.535 | 0.711 | 3.558 |
| **M32** | 2.2 | 3.67 | 10.026 |

Ces résultats illustrent l'influence de la proportion massique des silanes sur la taille des particules. En effet, la granulométrie augmente lorsque la proportion du Dynasylan® Octeo est diminuée.

### ❖ La température à 5°C

La réaction a été effectuée à basse température (5°C) et 400 tpm (41,8 rad.s⁻¹) avec ajout rapide de la soude (2 minutes).

Le milieu réactionnel est à 5°C au moment de l'ajout de la soude, la température augmente lors de l'ajout de la soude, on veille malgré tout à ne pas laisser monter la température au-dessus de 10°, et on veille bien à baisser à nouveau la température à 5° dès que l'ajout de la soude est terminé.

Les silanes fonctionnels ont été utilisés dans la manipulation M33 dans les proportions suivantes:
➢ M33 : 33,33% (Dynasylan® 4140, Dynasylan® A, Dynasylan® Octeo).

**Tableau 11 : résultat de l'analyse granulométrique des argiles faites à 5°C**

| **D(µM)** | **D(0,1)** | **D(0,5)** | **D(0,9)** |
|---|---|---|---|
| **M33** | 0.475 | 0.634 | 3.424 |

Les résultats de cette étude montrent une absence d'influence de la température sur la granulométrie des particules d'argiles obtenues par le procédé

### ❖ Conclusion

Les inventeurs ont montré que la température ne présente pas d'influence sur la granulométrie des particules obtenues.

### 2. Influence de la vitesse d'agitation

La réaction a été effectuée à température ambiante (23°C ±2°C) et 800 tpm (83,8 rad.s⁻¹) avec ajout rapide de la soude (2 minutes). Les conditions sont les mêmes que pour les manipulations M29 et M30 à l'exception de la vitesse d'agitation, ici élevée à 800 tpm (83,8 rad.s⁻¹).

Les silanes fonctionnels ont été utilisées dans les manipulations M35 et M36 dans les proportions suivantes:
➢ M34: 33,33% (Dynasylan® 4140,Dynasylan® A, Dynasylan® Octeo);
➢ M36: 70% Dynasylan® 4140, 25% Dynasylan® A, 5% Dynasylan® Octeo.

**Tableau 12 : résultat de l'analyse granulométrique des argiles faites à vitesse rapide**

| **D(µM)** | **D(0,1)** | **D(0,5)** | **D(0,9)** |
|---|---|---|---|
| **M34** | 0.534 | 0.705 | 2.733 |
| **M35** | 1.857 | 2.869 | 7.073 |

Les résultats de cette étude montrent une bonne reproductibilité de la manipulation faite à ambiante et vitesse rapide.

En outre, la comparaison des granulométries obtenues dans les manipulations M29 et M30 d'une part, et les manipulations M34 et M35 d'autres part met en évidence le fait que l'augmentation de la vitesse d'agitation de 400 à 800 tpm 41,8 à 83,8 (83,8 rad.s⁻¹) ne modifie pas la granulométrie.

### 3 . Influence du temps d'ajout de la soude

La réaction a été effectuée à température ambiante (23°C ±2°C) et 400 tpm (41,8 (83,8 rad.s⁻¹) avec ajout lent de la soude (20 minutes).
➢ M36 mise en oeuvre par le manipulateur E1: 33,33% (Dynasylan® 4140, Dynasylan® A, Dynasylan® Octeo).

**Tableau 13 : résultat de l'analyse granulométrique des argiles faites avec ajout lent de la soude**

| **D(µM)** | **D(0,1)** | **D(0,5)** | **D(0,9)** |
|---|---|---|---|
| **M36** | 2.728 | 4.702 | 9.911 |

Les résultats mettent en évidence l'influence de la vitesse d'ajout de la soude sur la taille des particules. En effet, en comparant les granulométries des argiles obtenues selon les manipulations M29 et M30 et celles obtenues selon la manipulation M36, on note une augmentation significative de la taille des particules d'argiles.

Aussi, l'ajout lent de la soude provoque une augmentation de la taille des particules.

### 4. Conclusion

La proportion des silanes hydrophile et lipophile modifie la granulométrie. Lorsque la proportion du Dynasylan® Octeo est diminuée, la granulométrie augmente.

Toutefois, la température allant de 0°C à 40°C ne modifie pas la granulométrie.

La vitesse d'agitation de l'hélice allant de 400 à 800 tpm (41,8 à 83,7 rad.s⁻¹) ne modifie pas non plus la granulométrie.

En revanche, le temps d'ajout de la soude modifie la granulométrie. En faisant varier le temps de 2 à 20 minutes : la granulométrie augmente avec la prolongation du temps d'ajout de la soude.

### Exemple 3: Caractérisations des argiles par Infra Rouge à transformée de Fourier

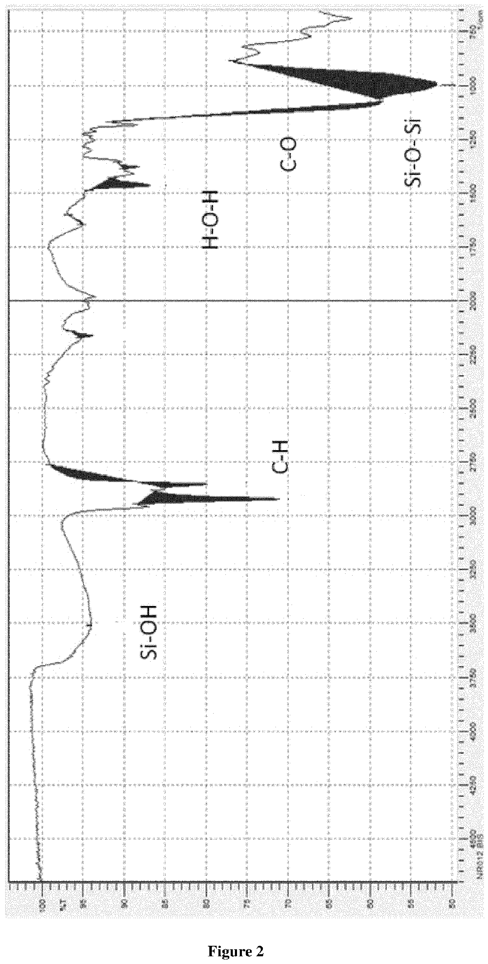

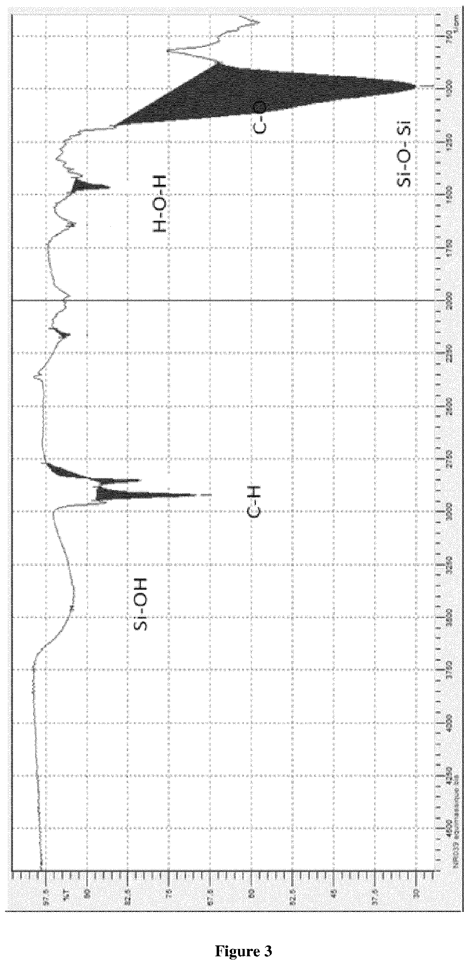

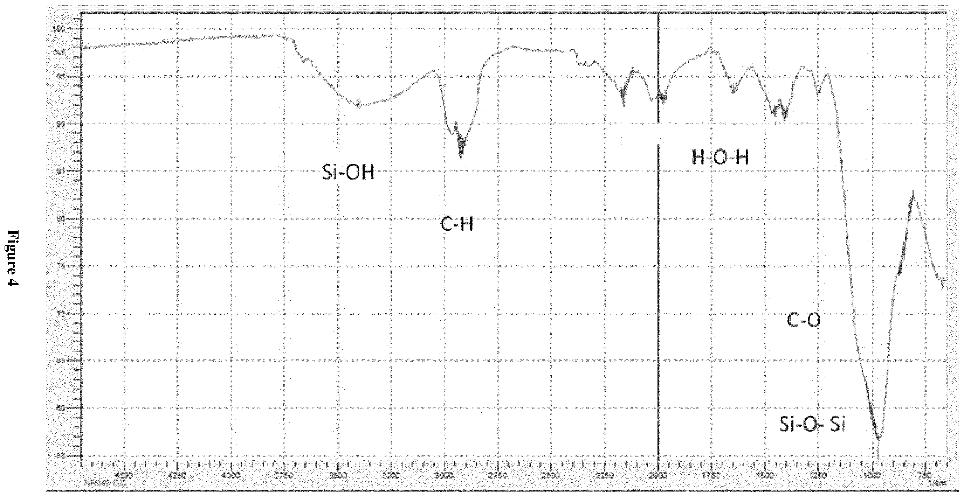

Les inventeurs ont caractérisé les argiles obtenues selon le procédé à l'aide d'une analyse infra rouge. Les résultats sont présentés ci-après. Ils ont procédé à cette analyse sur les argiles synthétisées lors des manipulations M10 (Figure 2), M 31 (Figure 3), M 32 (Figure 4).

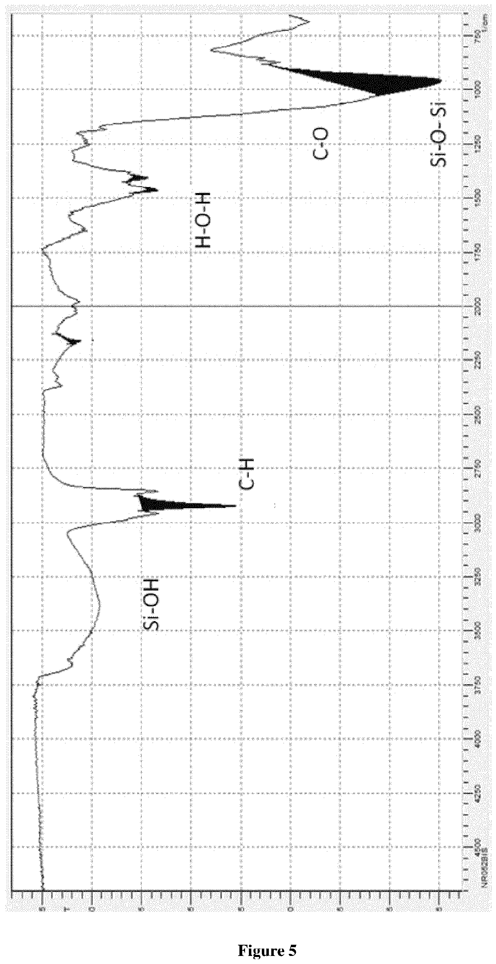

En outre, ils ont procédé à l'analyse IR d'une argile obtenue selon le procédé dans lequel ils ont utilisé un mélange équimolaire de Dynasylan® 4140, de Dynasylan® Octeo et de Dynasylan® A (Figure 5).

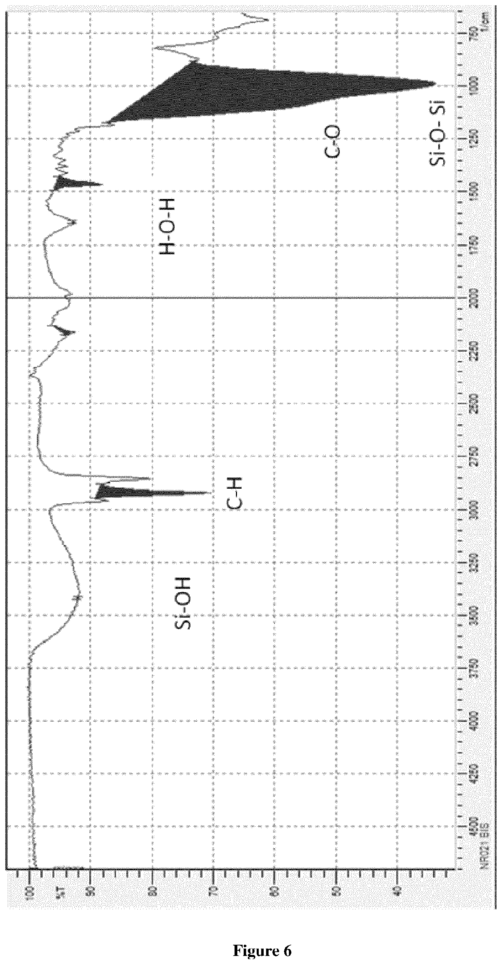

Enfin, ils ont procédé à l'analyse IR d'une argile obtenue selon la manipulation M28 dans laquelle ils ont utilisé un mélange de Dynasylan® 4140 à une concentration molaire de 32%, de Dynasylan® Octeo à une concentration molaire de 44% et de Dynasylan® A à une concentration molaire de 24% (Figure 6).

### Matériel et Méthodes

Les spectres Infra Rouge à transformée de Fourier, ou FTIR ont été réalisés à l'aide d'un spectromètre "IRAffinity-ATR diamant-Shimadzu", sur une gamme de 400 à 4000 cm⁻¹ avec un rapport S/N > 30 000:1 (p-p) et une résolution maximale de 0.5 cm⁻¹

Les échantillons ont été conditionnés sous forme de suspension prélevée à partir de l'échantillon final, et déposés directement sur la cellule de mesure.

### Résultats

Les spectres FTIR des 4 principaux types de particules synthétisées ont été analysés, elles présentent en commun une bande d'absorption vers 3600-3400 cm⁻¹ qui correspond à un pic de vibration lié à la présence de groupements Si-OH et Al(OH) obtenus par formation du squelette de silice ainsi que l'incorporation d'un groupement OH entre les feuillets de l'argile.

La bande située vers 1640 cm⁻¹ est attribuée à la présence de l'eau absorbée par l'argile : il s'agit d'un pic de vibration H-O-H.

La bande d'absorption de la fonction éther (C-O) qui doit apparaître normalement vers 1113 cm⁻¹ est masquée par la présence d'une bande caractéristique des fonctions Si-O de forte intensité qui apparaissent vers 1035 - 974 cm⁻¹ correspondant à un pic de vibration Si-O-Si symétrique.

Ainsi, les spectres FTIR des 4 principales argiles résumés dans les Figures 2 à 5 confirment la présence des groupements silanes liés.

### Exemple 4 : Utilisation des argiles précédemment décrites comme tensioactifs

Dans cette expérience, les inventeurs ont utilisé des argiles obtenues selon le procédé précédemment décrit pour la mise en oeuvre d'émulsions. Ils ont en outre utilisé des argiles du commerce, pour évaluer leurs performances en termes de stabilité des émulsions obtenues, en comparaison avec les argiles synthétisées selon le procédé précédemment décrit.

### Matériels et méthodes

Pour cette expérience, les inventeurs ont utilisé le Mirasil CM5 et l'huile de vaseline. Les valeurs des HLB requis pour ces huiles sont mentionnées dans le tableau ci-dessous, lorsque ces dernières étaient connues.

**Tableau 14: HLB des huiles utilisées**

| **Nom commercial** | **Nom INCI** | **Fournisseur** | **HLB requis Pour Huile/eau** | **HLB requis Pour Eau/huile** |
|---|---|---|---|---|
| Mirasil CM5 | Cyclomethicone | Bluestar silicone, Unipex | 7,5 | / |
| Huile de vaseline | Parafinum liquidum | Cooper | 10-11 | 6 |

Pour mémoire, la notion du HLB qui est une caractéristique des agents de surface, la notion de HLB requis ou critique est une caractéristique de la phase lipophile. Ce HLB critique d'une phase lipophile correspond au HLB du mélange d'émulsionnant qui, dans certaines conditions opératoires bien précises permet d'obtenir avec cette phase et de l'eau l'émulsion la plus fine et la plus stable. Ces valeurs de HLB requis sont d'après GRIFFIN des valeurs additives en fonction des proportions respectives des huiles.

La détermination de cette valeur se fait par voie expérimentale. Elle consiste à réaliser une série d'émulsions contenant chacune un mélange d'agents de surface de HLB différents. Le HLB du mélange d'agents de surface le plus stable est considéré comme le HLB requis de l'huile utilisée.

### Formulation et fabrication

La composition des émulsions est comme suit:
➢ 70 % eau; soit 21 g;
➢ 29 % huile; soit 8,7 g;
➢ 1 % argile humide, soit 0,3g

Ces émulsions sont obtenues de la façon suivante: la suspension d'argile est pesée sur une balance de précision à 0,01. L'huile est ajoutée dans le tube. On obtient 30g de chaque formule fabriqués dans un tube centrifuge de 50 ml de diamètre 3cm.

Dans le cadre de la réalisation d'une émulsion eau-dans-huile, l'eau est ajoutée lentement au mélange huile (au goutte à goutte en environ 5 min).

Dans le cadre d'une émulsion huile-dans-eau, le mélange argile et eau s'effectue sous agitation et l'ajout de l'huile se fait rapidement sous agitation à une vitesse comprise entre 8000 tpm (837,7 rad.s⁻¹) et 9500 tpm (994,8 rad.s⁻¹).

### Méthodes de contrôle

Après réalisation de l'émulsion, on vérifie si l'émulsion s'est formée. Dans le cas où le produit est hétérogène on note l'absence d'émulsion et on caractérise l'hétérogénéité.

Lorsque l'émulsion est obtenue, le sens de l'émulsion est vérifié avec un conductimètre de la marque *digital instruments*.

La taille des gouttelettes est observée au microscope à l'objectif X10.

La stabilité de l'émulsion est suivie à l'ambiante d'un point de vue cinétique par vérification de la présence de sédimentation ou de crémage.

### A] Formulation d'émulsions avec les Bentones 34 et 38

Les bentones sont des argiles modifiées en surface, disponibles sur le marché. Les inventeurs ont mis en oeuvre des émulsions à partir desdites bentones et des argiles obtenues selon le procédé précédemment décrit dans le but de comparer leurs performances.

Dans la suite, les pourcentages exprimés correspondent à des pourcentages en matière sèche.

Dans cette étude, les inventeurs ont tenté de produire des émulsions eau-dans-huile avec des bentones à une concentration en matière sèche identique à celle utilisée pour les argiles synthétisées selon le procédé précédemment décrit.

Dans le cadre de la réalisation d'une émulsion eau-dans-huile, l'eau est ajoutée lentement au mélange huile et bentones (au goutte à goutte en environ 5 min).

Le tableau suivant présente les résultats obtenus avec les bentones comme tensioactifs :

**Tableau 15: Réalisation d'émulsions avec les Bentones**

| Emulsions faites dans le sens E/H avec particules dans l'huile | Obtention d'une émulsion | Stabilité ambiante | Sens de l'émulsion | Taille des gouttelettes | pH |
|---|---|---|---|---|---|
| Bentone 34 à 0,15% + Vaseline | non | déphasage complet | / | / | / |
| Bentone 34 à 0,15% + Cyclomethicone | non | produit hétérogène légèrement gélifié | / | / | / |
| Bentone 38 à 0,15% + Vaseline | non | déphasage: crémage | / | / | / |
| Bentone 38 à 0,15% + Cyclomethicone | non | déphasage: crémage | / | / | / |

Les produits obtenus ne sont pas stables. Ils présentent des phénomènes de déphasage et de crémage. Aussi, il n'est pas possible de réaliser des émulsions stables avec 0,15% de bentones 34 et 38 et l'huile de vaseline et le cyclométhicone.

### B] Formulation d'émulsions avec les argiles synthétisées avec 3 silanes

Dans cette étude, les inventeurs ont réalisé des émulsions eau-dans-huile. Ces émulsions ont donc été réalisées avec 0,15% de matière sèche.

Le tableau suivant présente les résultats obtenus avec les argiles obtenues selon la manipulation M26 précédemment détaillée :

**Tableau 16: Réalisation d'émulsions avec des argiles obtenues selon le procédé précédemment décrit**

| Emulsions faites dans le sens E/H avec particules dans l'huile | Obtention d'une émulsion | Stabilité ambiante | Sens de l'émulsion | Taille des gouttelettes | % matière sèche |
|---|---|---|---|---|---|
| M26 + Vaseline | oui | Stable durant jours | E/H | Entre 20 et 80µm | 0.15 |
| M26 + Cyclomethicone | oui | Stable durant 7 jours | E/H | Entre 20 et 80µm | 0.15 |

Les émulsions obtenues à l'aide des argiles de la manipulation M26 à une concentration de 0,15% en matière sèche et de l'huile de vaseline et de cyclométhicone sont stables, tandis que les émulsions avec les mêmes huiles et des bentones commerciales ne le sont pas.

### C] Conclusion

Les inventeurs ont ainsi montré que la réalisation d'émulsion avec les argiles synthétisées est possible.

Ils ont en outre mis en évidence le fait que ces argiles permettent d'obtenir des émulsions stables avec de l'huile de vaseline et du cyclométhicone, tandis que les bentones commerciales ne le permettent pas.

## Revendications

1. Procédé de préparation d'argile comprenant les étapes suivantes :
a) dissolution de sels AB dans un solvant dans lequel A est un cation choisi parmi l'aluminium, le magnésium, le calcium, le zinc, le manganèse, le fer, le cuivre et leurs mélanges et B est un anion choisi parmi le chlorure, le sulfate, l'hydrogénocarbonate, le carbonate, le phosphate, l'hydrogénophosphate, l'acétylacétonate et leurs mélanges;
b) ajout d'au moins un silane fonctionnel au mélange obtenu à l'étape a); et
c) ajout d'une base forte au mélange de l'étape b) sous agitation à une température inférieure à 40°C;
**caractérisé en ce que** ledit silane fonctionnel est un composé chimique de formule générale (**I**)
(R)ₘ-Si-(X)ₚ (**I**)
dans lequel
- chaque X est choisi indépendamment parmi un atome de chlore et un groupe alkoxy en C₁-C₄;
- chaque R est un groupement choisi indépendamment parmi les groupes acétoxy, alkyle, aminé, aminoalkyle, aryle, diaminoalkyle, époxy, fluoroalkyle, glycol, mercapto, ester d'acide silicique, silyle, uréide, vinyle et vinylalkyle;
- p est égal à 2, 3 ou 4;
- m est égal à 0, 1, 2 ; et
- p+m=4.
**caractérisé en ce que**
l'étape b) du procédé de l'invention consiste en l'ajout d'un mélange d'au moins un silane fonctionnel choisi parmi les silanes hydrophiles et d'au moins un silane fonctionnel choisi parmi les silanes lipophiles, et
lesdits silanes fonctionnels de formule (I) sont choisis parmi le (polyéther)triéthoxysilane, le benzyltriéthoxysilane, le benzyltriméthoxysilane, le benzyltriéthoxysilane, le 2-(bicycloheptyl)trichlorosilane, le p-(t-butyl)phénétyltrichlorosilane, le n-butyltrichlorosilane, le t-butyltrichlorosilane, le n-butyltriéthoxysilane, le t-butyltriméthoxysilane, le (cyclohexylméthyl)trichlorosilane, le cyclohexyltrichlorosilane, le cyclohexyltriméthoxysilane, le cyclooctyltrichlorosilane, le cyclooctyltriméthoxysilane, le cyclopentaméthylènedichlorosilane, le cyclopentyltrichlorosilane, le cyclopentyltriméthoxysilane, le n-décyltrichlorosilane, le n-décyltriéthoxysilane, le n-décyltriméthoxysilane, le docosyltrichlorosilane, le docosyltriéthoxysilane, le dodécyltrichlorosilane, le dodécyltriéthoxysilane, le dodécyltriméthoxysilane, le dicosyltrichlorosilane, l'(heptadécafluoro-1,1,2,2-tétrahydrodécyl)-trichlorosilane, l'(heptadécafluoro-1,1,2,2-tétrahydrodécyl)-triéthoxysilane, l'(heptadécafluoro-1,1,2, 2-tétrahydrodécyl)-triméthoxysilane, le n-heptyltrichlorosilane, l'hexacosatrichlorosilane, le n-hexadécyltrichlorosilane, l'hexadécyltriéthoxysilane, l'hexyltrichlorosilane, l'hexyltriméthoxysilane, l'[hydroxy(polyéthylèneoxy)propyl]-triéthoxysilane (8-12 EO), l'isobutyltrichlorosilane, l'isobutyltriéthoxysilane, l'isobutyltriméthoxysilane, l'isooctyltrichlorosilane, l'isooctyltriéthoxysilane, l'isooctyltriméthoxysilane, le 2-[méthoxy(polyéthylèneoxy)propyl]triméthoxysilane, le méthoxytriéthylèneoxypropyltrichlorosilane, le méthoxytriéthylèneoxypropyltriméthoxysilane, le naphtylméthyltrichlorosilane, le (1-naphtyl)triéthoxysilane, le (1-naphtyl)triméthoxysilane, le nonafluorohexyltrichlorosilane, le nonafluorohexyltriéthoxysilane, le nonafluorohexyltriméthoxysilane, le n-octadécyltrichlorosilane, le n-octadécyltriéthoxysilane, le n-octadécyltriméthoxysilane, le n-octyltriéthoxysilane, le n-octyltriméthoxysilane, le pentyltrichlorosilane, le pentyltriéthoxysilane, le perfluoroalkyléthyl triéthoxysilane, le phényltrichlorosilane, le phényltriméthoxysilane, le 3-phénoxypropyltrichlorosilane, le 4-phénylbutyltrichlorosilane, le 6-phénylhexyltrichlorosilane, le 3-phénylpropyltrichlorosilane, le phényltrichlorosilane, le phényltriéthoxysilane, le phényltriméthoxysilane, le p-tolyltrichlorosilane, le p-tolyltriéthoxysilane, le p-tolyltriméthoxysilane, le 7-(trichlorosilylméthyl)pentadécane, le triacontyltrichlorosilane, le triéthoxysilylpropoxy(polyéthylèneoxy)-dodécanoate, le (triéthoxysilylpropyl)gluconamide,l'undécyltrichlorosilane,3-aminopropyltriméthoxysilane, 3-glycidyloxypropyltriméthoxysilane, 3-mercaptopropyltriméthoxysilane, vinyltriméthoxysilane, 3-méthacryloxypropyltriméthoxysilane, et leurs mélanges.

2. Procédé selon la revendication 1, le cation A du sel AB est un mélange d'aluminium et d'au moins un cation choisi parmi le magnésium, le calcium, le zinc, le manganèse, le fer et le cuivre.

3. Procédé selon la revendication 1 ou 2, **caractérisé en ce que** la base forte de l'étape c) est choisie parmi : l'hydroxyde de sodium, l'hydroxyde de potassium, l'hydroxyde de lithium, l'hydroxyde de césium et leurs mélanges.

4. Procédé selon l'une quelconque des revendications 1 à 3, **caractérisé en ce qu'**elle comprend en outre les étapes suivantes:
d) lavage ; et
e) centrifugation.

5. Procédé selon l'une quelconque des revendications 1 à 4, **caractérisé en ce que** l'ajout de la base forte à l'étape c) s'effectue en une seule fois et en une durée comprise entre 1 minute et 4 minutes, préférentiellement en 2 minutes.

6. Procédé selon l'une quelconque des revendications 1 à 4, **caractérisé en ce que** l'ajout de la base forte à l'étape c) s'effectue goutte à goutte et en une durée comprise entre 5 minutes et 45 minutes, préférentiellement entre 10 minutes et 30 minutes, préférentiellement en 20 minutes.

7. Procédé selon l'une quelconque de revendications 1 à 6, **caractérisé en ce que** l'étape c) d'ajout de la base forte se fait à une température comprise entre 4°C et 40°C, préférentiellement 25°C.

8. Utilisation de l'argile obtenue selon le procédé de l'une quelconque des revendications 1 à 7, en tant que tensioactif, échangeur d'ions, floculant, épaississant ou adsorbant.

9. Utilisation de l'argile obtenue selon le procédé de l'une quelconque des revendications 1 à 7 en tant que tensioactif.

10. Utilisation de l'argile obtenue selon le procédé de l'une quelconque des revendications 1 à 7, en tant que matrice de greffage d'une molécule ou d'une composition de molécules, préférentiellement une molécule ou une composition de molécules ayant une activité chimique.

## Patentansprüche

1. Verfahren zur Herstellung von Tonerde, umfassend die folgenden Schritte:
a) Auflösen von Salzen AB in einem Lösungsmittel, wobei A ein Kation ist, das aus Aluminium, Magnesium, Calcium, Zink, Mangan, Eisen, Kupfer, und Mischungen davon ausgewählt wird und B ein Anion ist, das aus Chlorid, Sulfat, Hydrogencarbonat, Carbonat, Phosphat, Hydrogenphosphat, Acetylacetonat und Mischungen davon ausgewählt wird;
b) Zugabe von mindestens einem funktionellen Silan zu der in Schritt a) erhaltenen Mischung; und
c) Zugabe einer starken Base zu der Mischung aus Schritt b) unter Rühren bei einer Temperatur von weniger als 40°C;
**dadurch gekennzeichnet, dass** das funktionelle Silan eine chemische Verbindung der allgemeinen Formel **(I)** ist:
(R)ₘ-Si-(X)ₚ **(I)**
worin
- jedes X unabhängig aus einem Chloratom und einer C₁-C₄ Alkoxygruppe ausgewählt wird;
- jedes R ein Rest ist, der unabhängig aus Acetoxy-, Alkyl-, Amin-, Aminoalkyl, Aryl-, Diaminoalkyl-, Epoxy-, Fluoralkyl-, Glykol-, Mercapto-, Kieselsäureester-, Silyl-, Ureid-, Vinyl- und Vinylalkyl-gruppen ausgewählt wird;
- p gleich 2, 3 oder 4 ist;
- m gleich 0, 1, 2 ist; und
- p+m=4.
**dadurch gekennzeichnet, dass** Schritt b) des Verfahrens der Erfindung aus der Zugabe einer Mischung aus mindestens einem funktionellen Silan, das aus hydrophilen Silanen ausgewählt wird und mindestens einem Silan, das aus lipophilen Silanen ausgewählt wird, besteht, und
die funktionellen Silane der Formel (I) ausgewählt werden aus (Polyether)triethoxysilan, Benzyltriethoxysilan, Benzyltrimethoxysilan, Benzyltriethoxysilan, 2-(Bicycloheptyl)trichlorsilan, p-(t-Butyl)phenethyltrichlorsilan, n-Butyltrichlorsilan, t-Butyltrichlorsilan, n-Butyltriethoxysilan, t-Butyltrimethoxysilan, (Cyclohexylmethyl)trichlorsilan, Cyclohexyltrichlorsilan, Cyclohexyltrimethoxysilan,Cyclooctyltrichlorsilan, Cyclooctyltrimethoxysilan, Cyclopentamethylendichlorsilan, Cyclopentyltrichlorsilan, Cyclopentyltrimethoxysilan, n-Decyltrichlorsilan, n-Decyltriethoxysilan, n-Decyltrimethoxysilan, Docosyltrichlorsilan, Docosyltriethoxysilan, Dodecyltrichlorsilan, Dodecyltriethoxysilan, Dodecyltrimethoxysilan, Dicosyltrichlorsilan, (Heptadecafluor-1,1,2,2-tetrahydrodecyl)-trichlorsilan, (Heptadecafluor-1,1,2,2-tetrahydrodecyl)-triethoxysilan, (Heptadecafluor-1,1,2,2-tetrahydrodecyl)-trimethoxysilan, n-Heptyltrichlorsilan, Hexacosatrichlorsilan, n-Hexadecyltrichlorsilan, Hexadecyltriethoxysilan, Hexyltrichlorsilan, Hexyltrimethoxysilan, [Hydroxy(polyethylenoxy)propyl]-triethoxysilan (8-12 EO), Isobutyltrichlorsilan, Isobutyltriethoxysilan, Isobutyltrimethoxysilan, Isooctyltrichlorsilan, Isooctyltriethoxysilan, Isooctyltrimethoxysilan, 2-[Methoxy(polyethylenoxy)propyl]trimethoxysilan, Methoxytriethylenoxypropyltrichlorsilan, Methoxytriethylenoxypropyltrimethoxysilan, Naphtylmethyltrichlorsilan, (1-Naphtyl)triethoxysilan, (1-Naphtyl)trimethoxysilan, Nonafluorhexyltrichlorsilan, Nonafluorhexyltriethoxysilan, Nonafluorhexyltrimethoxysilan, n-Octadecyltrichlorsilan, n-Octadecyltriethoxysilan, n-Octadecyltrimethoxysilan, n-Octyltriethoxysilan, n-Octyltrimethoxysilan, Pentyltrichlorsilan, Pentyltriethoxysilan, Perfluoralkylethyltriethoxysilan, Phenyltrichlorsilan, Phenyltrimethoxysilan, 3-Phenoxypropyltrichlorsilan, 4-Phenylbutyltrichlorsilan, 6-Phenylhexyltrichlorsilan, 3-Phenylpropyltrichlorsilan, Phenyltrichlorsilan, Phenyltriethoxysilan, Phenyltrimethoxysilan, p-Tolyltrichlorsilan, p-Tolyltriethoxysilan, p-Tolyltrimethoxysilan, 7-(Trichlorsilylmethyl)pentadecan, Triacontyltrichlorsilan, Triethoxysilylpropoxy(polyethylenoxy)-dodecanoat, (Triethoxysilylpropyl)gluconamid, Undecyltrichlorsilan, 3-Aminopropyltrimethoxysilan, 3-Glycidyloxypropyltrimethoxysilan, 3-Mercaptopropyltrimethoxysilan, Vinyltrimethoxysilan, 3-Methacryloxypropyltrimethoxysilan, und Mischungen davon.

2. Verfahren gemäß Anspruch 1, bei dem das Kation A des Salzes AB eine Mischung aus Aluminium und mindestens einem Kation, das aus Magnesium, Calcium, Zink, Mangan, Eisen und Kupfer ausgewählt wird, ist.

3. Verfahren gemäß Anspruch 1 oder 2, **dadurch gekennzeichnet, dass** die starke Base in Schritt c) ausgewählt wird aus: Natriumhydroxid, Kaliumhydroxid, Lithiumhydroxid, Cäsiumhydroxid und Mischungen davon.

4. Verfahren gemäß einem der Ansprüche 1 bis 3, **dadurch gekennzeichnet, dass** es ferner die folgenden Schritte umfasst:
d) Waschen; und
e) Zentrifugieren.

5. Verfahren gemäß einem der Ansprüche 1 bis 4, **dadurch gekennzeichnet, dass** die Zugabe der starken Base in Schritt c) auf einmal und in einem Zeitraum zwischen 1 Minute und 4 Minuten, vorzugsweise in 2 Minuten erfolgt.

6. Verfahren gemäß einem der Ansprüche 1 bis 4, **dadurch gekennzeichnet, dass** die Zugabe der starken Base in Schritt c) tröpfchenweise und in einem Zeitraum zwischen 5 Minuten und 45 Minuten, vorzugsweise zwischen 10 Minuten und 30 Minuten, vorzugsweise in 20 Minuten erfolgt.

7. Verfahren gemäß einem der Ansprüche 1 bis 6, **dadurch gekennzeichnet, dass** Schritt c), die Zugabe der starken Base, bei einer Temperatur zwischen 4°C und 40°C, vorzugsweise bei 25°C erfolgt.

8. Verwendung der Tonerde, erhalten gemäß einem Verfahren einer der Ansprüche 1 bis 7, als Tensid, Ionenaustauscher, Flockungsmittel, Verdickungsmittel oder Adsorptionsmittel.

9. Verwendung der Tonerde, erhalten gemäß einem Verfahren einer der Ansprüche 1 bis 7, als Tensid.

10. Verwendung der Tonerde, erhalten gemäß einem Verfahren einer der Ansprüche 1 bis 7, als Propfmatrix für ein Molekül oder eine Zusammensetzung aus Molekülen, vorzugsweise ein Molekül oder eine Zusammensetzung aus Molekülen mit einer chemischen Aktivität.

## Claims

1. Method of preparing clay comprising the following steps:
a) dissolving salts AB in a solvent in which A is a cation selected from aluminium, magnesium, calcium, zinc, manganese, iron, copper and mixtures thereof and B is an anion selected from chloride, sulphate, hydrogen carbonate, carbonate, phosphate, hydrogen phosphate, acetyl acetonate and mixtures thereof;
b) adding at least one functional silane to the mixture obtained in step a); and
c) adding a strong base to the mixture from step b), while stirring, at a temperature of less than 40°C;
**characterised in that** said functional silane is a chemical compound having the general formula (I)
(R)ₘ-Si-(X)ₚ **(I)**
in which
- each X is selected, independently, from a chlorine atom and a C₁-C₄ alkoxy group;
- each R is a group selected, independently, from acetoxy, alkyl, amine, aminoalkyl, aryl, diaminoalkyl, epoxy, fluoroalkyl, glycol, mercapto, silicic acid ester, silyl, ureide, vinyl and vinyl alkyl groups;
- p is 2, 3 or 4;
- m is 0, 1, 2; and
- p+m=4,
**characterised in that** step b) of the method of the invention comprises adding a mixture of at least one functional silane selected from hydrophilic silanes and at least one functional silane selected from lipophilic silanes, and
said functional silanes having the formula (I) are selected from (polyether)triethoxysilane, benzyltriethoxysilane, benzyltrimethoxysilane, benzyltriethoxysilane, 2-(bicycloheptyl)trichlorosilane, p-(t-butyl)phenethyltrichlorosilane, n-butyltrichlorosilane, t-butyltrichlorosilane, n-butyltriethoxysilane, t-butyltrimethoxysilane, (cyclohexylmethyl)trichlorosilane, cyclohexyltrichlorosilane, cyclohexyltrimethoxysilane, cyclooctyltrichlorosilane, cyclooctyltrimethoxysilane, cyclopentamethylenedichlorosilane, cyclopentyltrichlorosilane, cyclopentyltrimethoxysilane, n-decyltrichlorosilane, n-decyltriethoxysilane, n-decyltrimethoxysilane, docosyltrichlorosilane, docosyltriethoxysilane, dodecyltrichlorosilane, dodecyltriethoxysilane, dodecyltrimethoxysilane, dicosyltrichlorosilane, (heptadecafluoro-1,1,2,2-tetrahydrodecyl)trichlorosilane, (heptadecafluoro-1,1,2,2-tetrahydrodecyl)triethoxysilane, (heptadecafluoro-1,1,2,2-tetrahydrodecyl)trimethoxysilane, n-heptyltrichlorosilane, hexacosatrichlorosilane, n-hexadecyltrichlorosilane, hexadecyltriethoxysilane, hexyltrichlorosilane, hexyltrimethoxysilane, [hydroxyl(polyethyleneoxy)propyl]triethoxysilane(8-12 EO), isobutyltrichlorosilane, isobutyltriethoxysilane, isobutyltrimethoxysilane, isooctyltrichlorosilane, isooctyltriethoxysilane, isooctyltrimethoxysilane, 2-[methoxy(polyethyleneoxy)propyl]trimethoxysilane, methoxytriethyleneoxypropyltrichlorosilane, methoxytriethyleneoxypropyltrimethoxysilane, naphthylmethyltrichlorosilane, (1-naphthyl)triethoxysilane, (1-naphthyl)trimethoxysilane, nonafluorohexyltrichlorosilane, nonafluorohexyltriethoxysilane,
nonafluorohexyltrimethoxysilane, n-octadecyltrichlorosilane, n-octadecyltriethoxysilane, n-octadecyltrimethoxysilane, n-octyltriethoxysilane, n-octyltrimethoxysilane, pentyltrichlorosilane, pentyltriethoxysilane, perfluoroalkylethyltriethoxysilane, phenyltrichlorosilane, phenyltrimethoxysilane, 3-phenoxypropyltrichlorosilane, 4-phenylbutyltrichlorosilane, 6-phenylhexyltrichlorosilane, 3-phenylpropyltrichlorosilane, phenyltrichlorosilane, phenyltriethoxysilane, phenyltrimethoxysilane, p-tolyltrichlorosilane, p-tolyltriethoxysilane, le p-tolyltrimethoxysilane, 7-(trichlorosilylmethyl)pentadecane, triacontyltrichlorosilane, triethoxysilylpropoxy(polyethyleneoxy)dodecanoate, (triethoxysilylpropyl)gluconamide, undecyltrichlorosilane, 3-aminopropyltrimethoxysilane, 3-glycidyloxypropyltrimethoxysilane, 3-mercaptopropyltrimethoxysilane, vinyltrimethoxysilane, 3-methacryloxypropyltrimethoxysilane, and mixtures thereof.

2. Method according to claim 1, cation A of the salt AB is a mixture of aluminium and at least one cation selected from magnesium, calcium, zinc, manganese, iron and copper.

3. Method according to claim 1 or 2, **characterised in that** the strong base in step c) is selected from: sodium hydroxide, potassium hydroxide, lithium hydroxide, caesium hydroxide and mixtures thereof.

4. Method according to any one of claims 1 to 3, **characterised in that** it also comprises the following steps:
d) washing; and
e) centrifuging.

5. Method according to any one of claims 1 to 4, **characterised in that** the addition of the strong base in step c) takes place uninterruptedly and in a period of between 1 minute and 4 minutes, and preferably in 2 minutes.

6. Method according to any one of claims 1 à 4, **characterised in that** the addition of the strong base in step c) takes place drop by drop and in a period of between 5 minutes and 45 minutes, and preferably of between 10 minutes and 30 minutes and preferably in 20 minutes.

7. Method according to any one of claims 1 à 6, **characterised in that** step c) of adding the strong base takes place at a temperature of between 4°C and 40°C, and preferably 25°C.

8. Use of the clay obtained by the method of any one of claims 1 to 7 as a surfactant, ion exchange medium, flocculant, thickener or adsorbent.

9. Use of the clay obtained by the method of any one of claims 1 to 7 as a surfactant.

10. Use of the clay obtained by the method of any one of claims 1 to 7 as a matrix for grafting a molecule or a molecule composition and preferably a molecule or a molecule composition having a chemical activity.
